(19) Europäisches Patentamt / European Patent Office / Office européen des brevets

(11) **EP 3 425 721 B1**

(12) **EUROPEAN PATENT SPECIFICATION**

(45) Date of publication and mention
of the grant of the patent:
**31.05.2023 Bulletin 2023/22**

(21) Application number: **17179332.6**

(22) Date of filing: **03.07.2017**

(51) International Patent Classification (IPC):
***H01M 10/633*** *(2014.01)*

(52) Cooperative Patent Classification (CPC):
**H01M 10/633; H01M 10/486;** H01M 10/623;
H01M 10/625; Y02E 60/10

(54) **THERMAL MANAGEMENT SYSTEM FOR BATTERIES**

WÄRMEVERWALTUNGSSYSTEM FÜR BATTERIEN

SYSTÈME DE GESTION THERMIQUE POUR BATTERIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2019 Bulletin 2019/02**

(73) Proprietor: **Ningbo Geely Automobile Research
& Development Co. Ltd.
Hangzhou Bay New District
Ningbo 315336 (CN)**

(72) Inventors:
• **DAVID, Sandeep
 411 05 Göteborg (SE)**
• **GORANTLA NARAYANA MURTHY, Sri Vishnu
 416 81 Göteborg (SE)**
• **GRIMAUD, Christèle
 413 18 Göteborg (SE)**
• **AXELSSON, Bengt
 421 65 V Frölunda (SE)**

(74) Representative: **Zacco Sweden AB
P.O. Box 5581
Löjtnantsgatan 21
114 85 Stockholm (SE)**

(56) References cited:
**JP-A- H0 992 347        JP-A- 2013 101 884
US-A1- 2007 120 537    US-A1- 2010 019 729
US-A1- 2016 079 633**

## Description

Field of the invention

The present invention relates to the field of management of the temperature in a battery.

Background of the invention

The performance and the lifetime of a battery is temperature dependent. High temperature is well known to accelerate the battery's ageing and subsequently shorten the life-time. Therefore, the battery should operate within an optimal temperature window as much as possible in order to ensure the performance and life-time. This is valid for all types of batteries and especially for high voltage battery pack used in an automotive/vehicle application.

A thermal management system is used to manage the temperature of the battery, however, there is a need for a faster and more efficient thermal control of the temperature of the battery.

Summary of the invention

It is known in the art that a temperature of a battery is effecting the performance and the lifetime of a battery. For this reason it is known to use sensors to measure the temperature of the battery and to manage the battery based on the measured temperature.

The increase or decrease of the temperature in a battery depends on the current that is drawn from the battery and the resistance of the battery.

Aging in batteries depend on many different aspect and an effect of the aging of a battery is that the resistance of the battery increases over time. Today there is a demand and a need for a faster and more efficient thermal control of a battery.

An object of the present invention is to provide a method and a device which seek to mitigate, alleviate, or eliminate one or more of the above-identified deficiencies in the art and disadvantages singly or in any combination.

In this disclosure, a solution to the problem outlined above is proposed. In the proposed solution, a method performed in the thermal management device 1 for proactive managing the temperature of the battery 40 connected to the electronic device 2 will be described. The method comprise the steps of obtaining S1 a measurement of the current temperature $T_a$ of the battery 40, obtaining S2 a value of a battery current I of the battery 40, determining S3 a value of the resistance R of the battery 40, determining S4 a predictive temperature increase $T_{dc}$ of the battery 40 at least based on the obtained value of the battery current I and the determined value of the resistance R, and managing S5 the temperature T of the battery 40 at least based on the current temperature $T_a$ of the battery and the predictive temperature increase $T_{dc}$ of the battery 40. By managing S5 the temperature based on both the actual temperature $T_a$ and the predictive temperature increase $T_{dc}$ of the battery 40, the thermal management device 1 can act on an upcoming increase in temperature of the battery 40 before the actual increase has occurred. By using the predictive temperature increase $T_{dc}$ as a feedforward value when managing the temperature T of the battery 40, the management can react much faster and be more efficient. Further, the temperature management device 1 performing the method could avoid over heating of the battery and reduce damage to the battery.

According to an aspect the step of determining S3 the resistance R of the battery 40 comprise the step of obtaining S31 one or more of State of Charge (SoC) of the battery 40, State of Health (SoH) of the battery 40, the temperature T of the battery 40 and the current I flowing through the battery 40.

According to an aspect the determined S3 value of the resistance R of the battery 40 is a real-time value of the current resistance R of the battery 40. Put in another way, the determined value of the resistance R is the resistance of the battery of the current time. The value of the resistance R, thus, comprises the changes of the resistance of the battery 40 due to aging and other thing that has been exposing the battery.

According to an aspect the predictive temperature increase $T_{dc}$ is determined S4 at least based on the function $Tdc \propto I^2 \ast R$.

According to the invention the step of managing S5 the temperature T of the battery 40 comprise cooling S51 the battery 40 if the sum of the actual battery temperature $T_a$ and the predictive temperature increase $T_{dc}$ is higher than a first target temperature $T_{t1}$.

According to the invention the step of managing S5 the temperature T of the battery 40 comprise cooling S51 the battery 40 to a second target temperature $T_{t2}$ if the sum of the actual battery temperature $T_a$ and the predictive temperature increase $T_{dc}$ is higher than the first target temperature $T_{t1}$.

According to the invention the step of managing S5 the temperature T of the battery 40 comprise heating S53 the battery 40, if the sum of the actual battery temperature $T_a$ and the predictive temperature increase $T_{dc}$ is lower than a third target temperature $T_{t3}$.

According to an aspect the step of managing S5 the temperature of the battery 40 comprise managing S54 the thermal management device 1 based on a temperature difference $\Delta T$ between the sum of the current temperature $T_a$ of the battery 40 and the predictive temperature increase $T_{dc}$ of the battery 40 in view of at least one of the first, second and third target temperature $T_{t1}$, $T_{t2}$, $T_{t3}$.

According to an aspect the step of managing S5 the temperature of the battery comprise amplifying S6, in a proportional and/or integral and/or derivative (PID, PD, ID) controller, the temperature difference $\Delta T$.

According to an aspect the battery 40 is a high voltage battery 40.

According to an aspect the electronic device 2 is a vehicle 2.

According to an aspect the thermal management device 1 is connected to an accelerator 200 of the vehicle 2 and the step of obtaining S2 the value of the battery current I of the battery 40 comprise obtaining S21 an input from the accelerator 200 received from a driver of the vehicle 2.

According to an aspect the step of cooling S51 of the battery 40 comprise regulating S54 a cooling unit 104.

According to an aspect the step of heating S53 of the battery 40 comprise regulating a heating unit 105.

According to an aspect the steps in the method are performed continuously. Put in another way, the steps in the method is repeated over and over again as long as the electronic device 1 is active. According to an aspect the steps of the method is repeated with a pre-set time period.

According to an aspect the thermal management device is configured to perform the method according to the above.

According to an aspect the thermal management device 1 is connected to the battery 40 and the electronic device 2.

According to an aspect the electronic device 2 is one of an electrical vehicle, a smartphone, a tablet, a portable computer and an electrical bike.

Generally, all terms used in the claims are to be interpreted according to their ordinary meaning in the technical field, unless explicitly defined otherwise herein. All references to "a/an/the [element, device, component, means, etc.]" are to be interpreted openly as referring to at least one instance of said element, device, component, means, etc., unless explicitly stated otherwise. Further, by the term "comprising" it is meant "comprising but not limited to" throughout the application.

## Brief description of the drawings

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments and aspects.

    Figure 1 discloses a schematic view of a thermal management device for proactive managing the temperature of a battery connected to an electronic device.
    Figure 2 disclose a schematic view of an electric vehicle comprising a thermal management device according to some aspects of the invention.

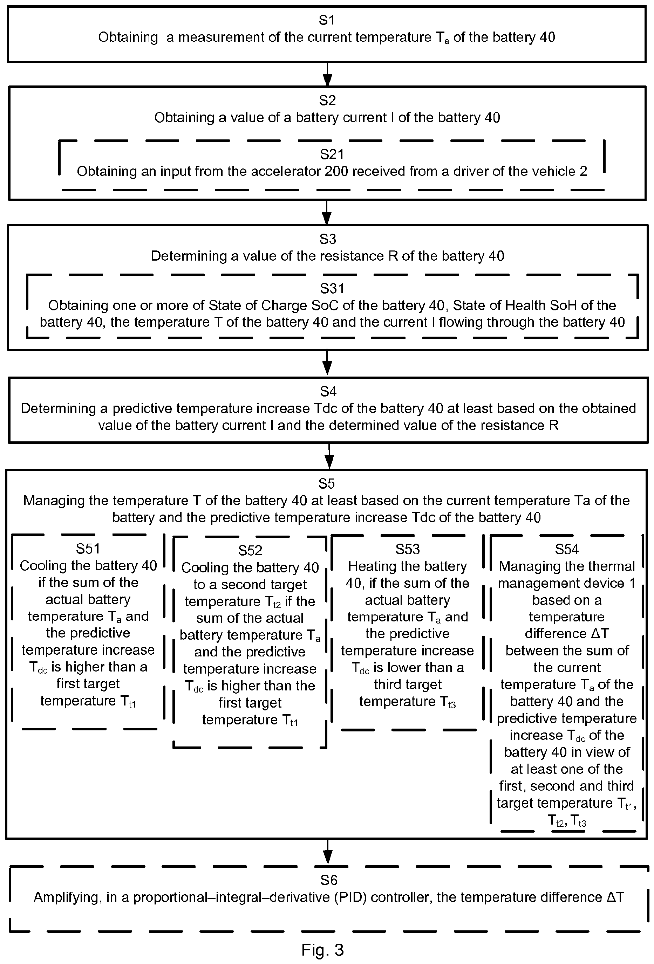

    Figure 3 illustrates a flow chart of the method steps according to some aspects of the invention.

## Detailed description

Aspects of the present disclosure will be described more fully hereinafter with reference to the accompanying figures. The assembly disclosed herein can, however, be realized in many different forms and should not be construed as being limited to the aspects set forth herein.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

The present invention relates to method performed in a thermal management device for proactive managing the temperature of a battery and to a thermal management device.

Today it is very popular to use batteries for powering all kinds of electrical devices. Not only smaller home electronic devices such as smartphones, tablets and portable computers but also electrical devices such as electrical drilling machines, electrical lawn mowers, electrical bikes and electrical vehicles/automotive make use of batteries. There are different types of batteries, and in particular, batteries that are rechargeable are commonly used.

A battery requires thermal management of the temperature of the battery to ensure plural years of utilization of the battery and to avoid that the battery gets damaged due to too high temperatures. Further, if the temperature of the battery is to low the performance of the battery could change/decrease.

Electric vehicles/automotive, from hybrids to full electric vehicles, require thermal management of the temperature of the battery to ensure plural years of utilization of the vehicle battery. The wear of the vehicle battery depends on different things that it is exposed to, for instance the driving behaviour of a vehicle driver. To prevent battery cell damage and ensure the safety of the battery, the temperature of the battery is managed to keep the temperature of the battery below a desired temperature or in a temperature window between two temperatures.

A vehicle driver with an aggressive driving behaviour will increase the temperature of the battery and the battery should be cooled. At the same time, the battery should be heated if the driver is using to low current or if the outside temperature is low.

The inventors have identified that there is a need for a solution where the temperature of the battery is proactively managed instead of a more traditionally reactive management of the temperature of a battery.

Traditionally, a thermal management system/device for managing the temperature of ta battery is a closed-loop system. In this closed loop system, the thermal management system compares an actual battery temperature $T_a$ with a target temperature $T_t$. The target temperature is a pre-set temperature below which temperature the battery should be kept to perform as intended/desired. Depending on these values, an error signal $\Delta T$ is obtained via the function (1).

$$\Delta T = T_t - T_a \quad (1)$$

The error signal $\Delta T$ could be amplified by a control system, such as a proportional-integral-derivative (PID) controller gain ($G \times \Delta T$), aiding the thermal management system to reach the pre-set target temperature $T_t$. This approach measures the battery temperature in real time and the thermal management system manages the temperature of the battery based on the current battery temperature $T_a$ and the pre-set target temperature $T_t$. Cooling of the battery is requested only when the battery's temperature is above the pre-set target temperature $T_t$.

The inventors have noted that the internal resistance of the battery depends on one or more of the State of Charge of the battery, State of Health of the battery, temperature of the battery and the current flowing through the battery. By accurately knowing the present/current/real-time resistance of the battery and the present/current/real-time current flowing through the battery, a predictive temperature increase due to the heat loss can be obtained by the function (2).

$$T_{dc} \propto I^2 * R \quad (2)$$

The predictive temperature increase $T_{dc}$ is the temperature that the battery will increase, based on the current resistance of the battery and the current drawn from the battery, if nothing is done.

A battery that is rechargeable has a certain State of Charge, SOC. The units of State of Charge, SOC, are percentage points where 100% means fully charged battery and 0% means a fully discharged battery, i.e. a battery that is "empty". A battery is traditionally charged to a certain State of Charge, SOC.

The so called State of Health, SOH, are percentage points of the condition of a battery compared to its ideal conditions where 100% means the battery's conditions match the battery's specifications. Typically at the time of manufacture the battery's State of Health, SOH, is 100% but decreases over time and use of the battery. The State of Health, SOH, does not correspond to any particular Physical value instead different manufacturers have different ways to determine the State of Health value of a battery. There are different parameters that are being used for determining the State of Health value, in particular the battery internal resistance, the battery internal impedance, the battery internal conductance, the battery capacity, the battery voltage etc. There are also other factors that can be taken in consideration for determining the State of Health, SOH, value such as the number of times the battery has been charged/discharged and the temperatures that the battery has been exposed to.

Batteries age with reduced battery cell energy capacity due to chemical changes to the electrodes. Aging in batteries, for example in lithium ion batteries, change the resistance of the battery over time.

Further, the inventors has discovered that the electrical time constant is faster than the thermal time constant, thus, it takes time for the temperature of the battery to increase to $T_{dc}$. This means that an increase of the temperature of the battery can be calculated before the temperature of the battery actually has increased. Put in yet another way, the change of temperature of the battery can be determined before the actual temperature of the battery has changed. Put in yet another way, the actual temperature of the battery in a time in the future can be predicted. A thermal management device configured to manage the temperature of the battery can be made to act quickly by including this predictive temperature increase $T_{dc}$ of the temperature as a feedforward term. By accurately designing the method performed in the thermal management device based on these aspects, a more efficient management/control/regulating of the temperature of the battery could be achieved.

The method according to the invention takes into account the internal resistance R of the battery and the predictive temperature increase $T_{dc}$. The feedforward term fine tunes the management by computing the difference $\Delta T$ of the actual temperature $T_a$ and the predictive temperature increase $T_{dc}$ in view of the target temperature $T_t$ by the function (3).

$$\Delta T = T_t - T_a + T_{dc} \quad (3)$$

Since the temperature management device is aware of/takes into consideration the additional predictive temperature increase $T_{dc}$, the actions taken by the temperature management device will be faster and more efficient. Further, this also makes the method performed in the thermal management device proactive in maintaining the temperature of the battery close to an optimal temperature of the battery. The optimal temperature is according to an aspect a first target temperature $T_{t1}$ which the temperature of the battery should be below. According to an aspect the temperature of the battery should be between the first target temperature $T_{t1}$ and the second target temperature $T_{t2}$. Put in another way, the temperature of the battery should be managed to be within a temperature window leading to an increased lifetime and performance of the battery pack. According to an aspect the temperature should be above a third target temperature $T_{t3}$.

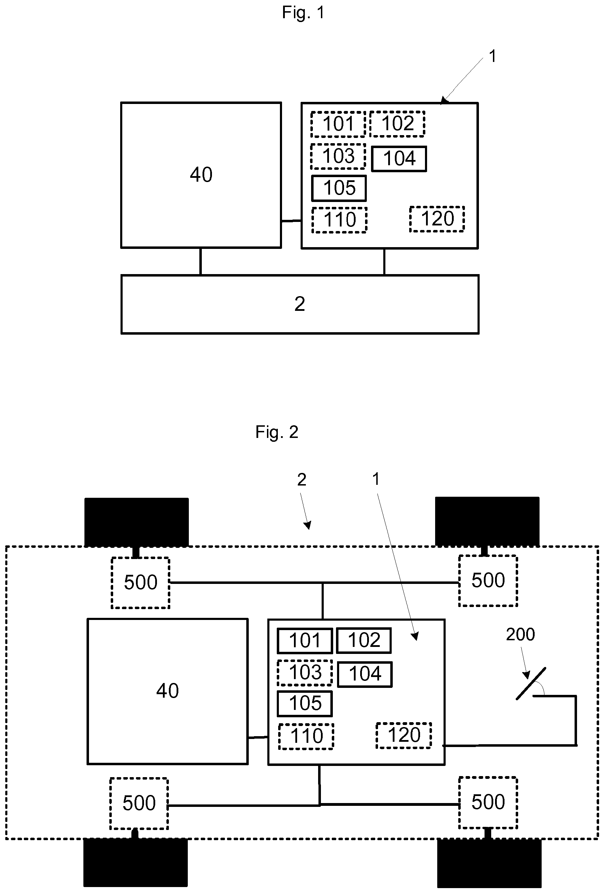

Reference is now made to Fig. 1 that illustrates a temperature management device 1 according to an aspect of the invention. The temperature management device 1 is connected to a battery 40 and an electronic device 2. The battery 40 is further connected to the electronic device 2 and configured to power the electronic device 2. According to an aspect further batteries could be connected to the electronic device 2 and or temperature management device.

The temperature management device 1 comprises a memory 101 and a processing circuitry 102. According to an aspect, the temperature management device 1 further comprise at least one of a user interface unit 103, a measurement unit 110 and a control unit 120. The user interface unit 103 is typically configured for input and output of information from/to a user of the electronic device 2. In an aspect of a vehicle, as disclosed in fig. 2, the user can be the driver of the vehicle. According to an aspect the user interface 103 is used to set one or more of the target temperatures $T_{t1}$, $T_{t2}$, $T_{t3}$. In one example the user interface unit 103 is a touch sensitive display but can be any input/output device. According to an aspect the temperature management device 1 comprise a cooling unit 104. The cooling unit 104 is connected to the battery and arranged to cool the battery 40 to lower the actual temperature $T_a$ of the battery 40. According to an aspect the cooling unit 104 is arranged to cool the battery to prevent a predictive temperature increase $T_{dc}$ of the battery. According to an aspect the temperature management device 1 comprise a heating unit 105. The heating unit 105 is connected to the battery 40 and arranged to heat the battery 40 to increase the actual temperature $T_a$ of the battery 40. According to an aspect the heating unit 105 is arranged to heat the battery 40 to prevent a predictive negative temperature increase $T_{dc}$ of the battery 40 below the target temperature $T_{t3}$.

According to an aspect the memory 101 is a Random-access Memory, RAM; a Flash memory; a hard disk; or any storage medium that can be electrically erased and reprogrammed. According to an aspect the processing circuitry 102 is a Central Processing Unit, CPU, or any processing unit carrying out instructions of a computer program or operating system.

According to an aspect, as disclosed in fig. 2, the electronic device 2 is a vehicle 2, e.g. a hybrid vehicle or fully electric vehicle, according to some aspects of the invention. The vehicle 2 comprises the battery 40 connected to the temperature management unit 1. The vehicle 2 further comprise a electrical motors 500 that are in connection with the battery 40 and being used for driving the vehicle 2.

According to an aspect the vehicle 2 comprise an accelerator 200 connected to the battery. The power form the battery 40 needed for powering the motors 500 is regulated by the accelerator 200. A driver requiring a fast acceleration and/or fast speed of the vehicle 400 will demand the battery 40 to deliver more power to the electrical motors 500.

According to an aspect the thermal management device 1 detects and obtains different measurements of values and/or values of the battery 40. According to an aspect the measurement unit 110 of the thermal management device 1 obtains the measurements of values and/or the values of the battery 40. According to an aspect one or more sensors in, or connected to, the thermal management device 1 and the battery 40, detects and obtains the values of the battery.

According to an aspect the measurements of values and/or the value of the battery is one or more of the State of Charge SoC of the battery, State of Health SoH of the battery 40, the actual temperature $T_t$ of the battery 40, the resistance R of the battery, the battery capacity, the battery internal impedance voltage value of the battery 40 and the current I flowing through the battery 40. The values can be the actual value of the parameters or a value corresponding/relating to the actual value of the parameter. According to an aspect the measurements of values and/or the value of the battery is processed by the processing circuitry 102 and stored in the memory 101 of the thermal management device 1.

According to an aspect a State of Health value can be determined by first measuring a value by the measurement unit 110, the value corresponding to at least one of the battery capacity or the battery internal impedance.

According to an aspect the voltage value is used as an input parameter value for determining the State of Charge value of the battery 40. According to an aspect data from a known discharge function, or curve, of the battery 40 together with the voltage value is used in order to determine the State of Charge value of the battery 40.

According to an aspect the measurement unit 110 is configured to obtain measurement data related to one or more of the voltage, impedance, resistance, current, heat, pressure, gravity, pH and other data relating to the State of Charge, SOC and/or State of Health, SOH, of the battery 40. According to an aspect at least one of any known methods such as chemical method, voltage method, current integration method, Kalman filtering or pressure method is applied in order to obtain a State of Charge value.

The processing circuitry 102 is configured to cause the thermal management device 1 to obtain a measurement of the current temperature $T_a$ of the battery, obtain a value of the battery current I of the battery. Further the thermal management device 1 is configured to obtain measurements to determining a value of the resistance R of the battery. The thermal management device 1 is configured to determine the predictive temperature increase $T_{dc}$ of the battery 40 at least based on the obtained value of the battery current I and the determined value of the resistance R. According to an aspect the predictive temperature increase $T_{dc}$ is determined by using the function $T_{dc} \propto I^2 * R$ (2).

The thermal management device 1 thereafter controls/manage/regulates the temperature of the battery 40 at least based on the values of the current temperature $T_a$ of the battery 40 and the predictive temperature increase $T_{dc}$ of the battery 40.

Hereafter a method performed in the thermal management device 1 for proactive managing the temperature of the battery 40 connected to the electronic device 2 will be described. The method comprise the steps of obtaining S1 a measurement of the current temperature $T_a$ of the battery 40, obtaining S2 a value of a battery current I of the battery 40, determining S3 a value of the resistance R of the battery 40, determining S4 a predictive temperature increase $T_{dc}$ of the battery 40 at least based on the obtained value of the battery current I and the determined value of the resistance R, and managing S5 the temperature T of the battery 40 at least based on the current temperature $T_a$ of the battery and the predictive temperature increase $T_{dc}$ of the battery 40. By managing S5 the temperature based on both the actual temperature $T_a$ and the predictive temperature increase $T_{dc}$ of the battery 40, the thermal management device 1 can act on an upcoming increase in temperature of the battery 40 before the actual increase has occurred. By using the predictive temperature increase $T_{dc}$ as a feedforward value when managing the temperature T of the battery 40, the method in the thermal management device 1 can react much faster and be more efficient. Further, the temperature management device 1 performing the method could avoid over heating of the battery 40 and reduce the risk of damaging the battery.

According to an aspect the step of determining S3 the resistance R of the battery 40 comprise the step of obtaining S31 one or more of the State of Charge (SoC) of the battery 40, the State of Health (SoH) of the battery 40, the temperature T of the battery 40 and the current I flowing through the battery 40.

According to an aspect the determined S3 value of the resistance R of the battery 40 is a real-time value of the current resistance R of the battery 40. Put in another way, the determined value of the resistance R is the resistance of the battery at the current time. The value of the resistance R, thus, comprises and takes into consideration the changes of the resistance R of the battery 40 due to aging and other things that has effected the battery.

According to an aspect the predictive temperature increase $T_{dc}$ is determined S4 at least based on the function $T_{dc} \propto I^2 * R$.

According to the invention the step of managing S5 the temperature T of the battery 40 comprise cooling S51 the battery 40 if the sum of the actual battery temperature $T_a$ and the predictive temperature increase $T_{dc}$ is higher than a first target temperature $T_{t1}$. Put in another way, the temperature of the battery 40 is kept below the first target temperature $T_{t1}$.

According to the invention the step of managing S5 the temperature T of the battery 40 comprise cooling S52 the battery 40 to a second target temperature $T_{t2}$ if the sum of the actual battery temperature $T_a$ and the predictive temperature increase $T_{dc}$ is higher than the first target temperature $T_{t1}$. According to an aspect the step of managing S5 the temperature of the battery 40 comprise cooling the battery 40 to keep the temperature of the battery 40 between the first target temperature $T_{t1}$ and the second target temperature $T_{t2}$.

According to the invention the step of managing S5 the temperature T of the battery 40 comprise heating S53 the battery 40, if the sum of the actual battery temperature $T_a$ and the predictive temperature increase $T_{dc}$ is lower than a third target temperature $T_{t3}$.

According to an aspect the step of managing S5 the temperature of the battery 40 comprise managing S54 the thermal management device 1 based on the temperature difference $\Delta T$ between the sum of the current temperature $T_a$ of the battery 40 and the predictive temperature increase $T_{dc}$ of the battery 40 in view of at least one of the first, second and third target temperature $T_{t1}$, $T_{t2}$, $T_{t3}$.

According to an aspect the step of managing S5 the temperature of the battery comprise amplifying S6, in a proportional and/or integral and/or derivative (PID, PD, ID) controller, the temperature difference $\Delta T$. According to an aspect the step of managing S5 the temperature of the battery comprise amplifying S6, in a control system, the temperature difference $\Delta T$.

According to an aspect the electronic device 2 is a vehicle 2.

According to an aspect the thermal management device 1 is connected to an accelerator 200 of the vehicle 2 and the step of obtaining S2 the value of the battery current I of the battery 40 comprise obtaining S21 an input from the accelerator 200 received from a driver of the vehicle 2.

According to an aspect the step of a cooling S51 of the battery 40 comprise regulating S55 a cooling unit 104.

According to an aspect the step of a heating S53 of the battery 40 comprise regulating S56 a heating unit 105.

According to an aspect the steps in the method are performed continuously. Put in another way, the steps in the method is repeated over and over again as long as the electronic device 2 is active. According to an aspect the steps of the method is repeated with a pre-set time period. According to an aspect the sampling time that the method is repeated by depends on the thermal time constant and the electrical time constant (i.e. dependant on the current flowing through the battery due to the driving behavior). The thermal time constant is according to an aspect very high compared to the electrical time constant and the sampling time could be designed based on the application.

According to an aspect the thermal management device is configured to perform the method according to the above.

According to an aspect the thermal management device 1 is connected to the battery 40 and the electronic device 2.

According to an aspect the electronic device 2 is one of an electrical vehicle, a smartphone, a tablet, a portable computer and an electrical bike. According to an aspect the electronic device 2 is a vehicle 2.

According to an aspect of the invention further proposes a computer program comprising computer-readable code which, when executed by the processing circuitry 102 of the electronic device 2, causes the thermal management device 1 to perform the method. Hence the code can be reproduced and run on plural different electronic devices 2 to perform the method. According to an aspect the method is carried out by instructions in a computer program that is downloaded and run on the thermal management device 1. According to an aspect the computer program is a so called app. The app can according to an aspect generate a user interface for user interaction via a user interface unit 103 of a second electronic device. The disclosure further proposes a computer program product comprising a non-transitory memory storing a computer program. Hence, the memory can maintain the code so that the method can be executed at any later stage.

The person skilled in the art realizes that the present invention by no means is limited to the preferred embodiments described above. On the contrary, many modifications and variations are possible within the scope of the appended claims.

The description of the aspects of the disclosure provided herein has been presented for purposes of illustration. The description is not intended to be exhaustive or to limit aspects of the disclosure to the precise form disclosed, and modifications and variations are possible in light of the above teachings or may be acquired from practice of various alternatives to the provided aspects of the disclosure. The examples discussed herein were chosen and described in order to explain the principles and the nature of various aspects of the disclosure and its practical application to enable one skilled in the art to utilize the aspects of the disclosure in various manners and with various modifications as are suited to the particular use contemplated. The features of the aspects of the disclosure described herein may be combined in all possible combinations of methods, apparatus, modules, systems, and computer program products. It should be appreciated that the aspects of the disclosure presented herein may be practiced in any combination with each other.

It should be noted that the word "comprising" does not necessarily exclude the presence of other elements or steps than those listed. It should further be noted that any reference signs do not limit the scope of the claims.

## Claims

1. A method performed in a thermal management device (1) for proactive managing the temperature of a battery (40) connected to an electronic device (2), the method comprising:

   - obtaining (S1) a measurement of the current temperature ($T_a$) of the battery (40),
   - obtaining (S2) a value of a battery current (I) of the battery (40),
   - determining (S3) a value of the resistance (R) of the battery (40),
   - determining (S4) a predictive temperature increase ($T_{dc}$) of the battery (40) at least based on the obtained value of the battery current (I) drawn from the battery and the determined value of the resistance (R), and
   - managing (S5) the temperature (T) of the battery (40) at least based on the current temperature ($T_a$) of the battery and the predictive temperature increase ($T_{dc}$) of the battery (40) by using the predictive temperature increase ($T_{dc}$) as a feedforward value when managing the temperature (T) of the battery (40),

   wherein the step of managing (S5) the temperature (T) of the battery (40) comprise cooling (S51) the battery (40) if the sum of the actual battery temperature ($T_a$) and the predictive temperature increase ($T_{dc}$) is higher than a first target temperature ($T_{t1}$), wherein the step of managing (S5) the temperature (T) of the battery (40) comprise cooling (S52) the battery (40) to a second target temperature ($T_{t2}$) if the sum of the actual battery temperature ($T_a$) and the predictive temperature increase ($T_{dc}$) is higher than the first target temperature ($T_{t1}$), and wherein the step of managing (S5) the temperature (T) of the battery (40) comprise heating (S53) the battery (40), if the sum of the actual battery temperature ($T_a$) and the predictive temperature increase ($T_{dc}$) is lower than a third target temperature ($T_{t3}$).

2. The method according to claim 1, wherein the step of determining (S3) the resistance (R) of the battery (40) comprise the step of obtaining (S31) one or more of State of Charge (SoC) of the battery (40), State of Health (SoH) of the battery (40), the temperature

(T) of the battery (40) and the current (I) flowing through the battery (40).

3. The method according to any of claims 1 or 2, wherein the determined (S3) value of the resistance (R) of the battery (40) is a real-time value of the current resistance (R) of the battery (40).

4. The method according to any of the preceding claims, wherein the predictive temperature increase ($T_{dc}$) is determined (S4) at least based on the function $T_{dc} \propto I^2{*}R$.

5. The method according to any of the preceding claims, wherein the step of managing (S5) the temperature of the battery (40) comprise managing (S54) the thermal management device (1) based on a temperature difference ($\Delta T$) between the sum of the current temperature ($T_a$) of the battery (40) and the predictive temperature increase ($T_{dc}$) of the battery (40) in view of at least one of the first, second and third target temperature ($T_{t1}$, $T_{t2}$, $T_{t3}$).

6. The method according to any of the preceding claims, wherein the thermal management device (1) is connected to an accelerator (200) of a vehicle (2) and the step of obtaining (S2) the value of the battery current (I) of the battery (40) comprise obtaining (S21) an input from the accelerator (200) received from a driver of the vehicle (2).

7. The method according to any of the preceding claims, wherein the step of cooling (S51) of the battery (40) comprise regulating (S55) a cooling unit (104).

8. The method according to any of the preceding claims, wherein the step of heating (S53) of the battery (40) comprise regulating (S56) a heating unit (105).

9. The method according to any of the preceding claims, wherein the steps S1-S5 are performed continuously.

10. A thermal management device (1) for proactive managing a temperature of a battery (40) connected to an electronic device (2), configured to perform the method according to any of claims 1 to 9.

11. The thermal management device (1) according to claim 10 wherein the thermal management device (1) is connected to the battery (40) and the electronic device (2).

12. The thermal management device (1) according to claims 10 or 11, wherein the electronic device (2) is one of an electrical vehicle, a smartphone, a tablet, a portable computer and an electrical bike.

**Patentansprüche**

1. Verfahren zum proaktiven Verwalten der Temperatur einer mit einem elektronischen Gerät (2) verbundenen Batterie (40), das in einem Wärmeverwaltungsgerät (1) durchgeführt wird, wobei das Verfahren umfasst:

   - Erhalten (S1) einer Messung der Ist-Temperatur ($T_a$) der Batterie (40),
   - Erhalten (S2) eines Werts eines Batteriestroms (I) der Batterie (40),
   - Bestimmen (S3) eines Werts eines Widerstands (R) der Batterie (40),
   - Bestimmen (S4) einer prognostizierten Temperaturerhöhung ($T_{dc}$) der Batterie (40) zumindest teilweise auf Basis des erhaltenen Werts des aus der Batterie gezogenen Batteriestroms (I) und des bestimmten Werts des Widerstands (R), und
   - Verwalten (S5) der Temperatur (T) der Batterie (40) zumindest teilweise auf Basis der Ist-Temperatur ($T_a$) der Batterie und der prognostizierten Temperaturerhöhung ($T_{dc}$) der Batterie (40), indem die prognostizierte Temperaturerhöhung ($T_{dc}$) bei der Verwaltung der Temperatur (T) der Batterie (40) als Vorkopplungswert verwendet wird,

   wobei der Schritt des Verwaltens (S5) der Temperatur (T) der Batterie (40) das Kühlen (S51) der Batterie (40) umfasst, wenn die Summe aus der tatsächlichen Batterietemperatur ($T_a$) und der prognostizierten Temperaturerhöhung ($T_{dc}$) höher als eine erste Zieltemperatur ($T_{t1}$) ist, wobei der Schritt des Verwaltens (S5) der Temperatur (T) der Batterie (40) das Kühlen (S52) der Batterie (40) auf eine zweite Zieltemperatur ($T_{t2}$) umfasst, wenn die Summe aus der tatsächlichen Batterietemperatur ($T_a$) und der prognostizierten Temperaturerhöhung ($T_{dc}$) höher als die erste Zieltemperatur ($T_{t1}$) ist, und wobei der Schritt des Verwaltens (S5) der Temperatur (T) der Batterie (40) das Erhitzen (S53) der Batterie (40) umfasst, wenn die Summe aus der tatsächlichen Batterietemperatur ($T_a$) und der prognostizierten Temperaturerhöhung ($T_{dc}$) geringer als eine dritte Zieltemperatur ($T_{t3}$) ist.

2. Verfahren nach Anspruch 1, wobei der Schritt des Bestimmens (S3) des Widerstands (R) der Batterie (40) den Schritt des Erhaltens (S31) des Ladezustands (SoC) der Batterie (40), des Alterungszustands (SoH) der Batterie (40), der Temperatur (T) der Batterie (40) und/oder des durch die Batterie (40) fließenden Stroms (I) umfasst.

**3.** Verfahren nach einem der Ansprüche 1 oder 2, wobei der bestimmte (S3) Wert des Widerstands (R) der Batterie (40) ein Echtzeitwert des Ist-Widerstands (R) der Batterie (40) ist.

**4.** Verfahren nach einem der vorstehenden Ansprüche, wobei die prognostizierte Temperaturerhöhung ($T_{dc}$) zumindest auf Basis der Funktion $T_{dc} \propto I^2 * R$ bestimmt (S4) wird.

**5.** Verfahren nach einem der vorstehenden Ansprüche, wobei der Schritt des Verwaltens (S5) der Temperatur der Batterie (40) das Verwalten (S54) des Wärmeverwaltungsgeräts (1) auf Basis eines Temperaturunterschieds ($\Delta T$) zwischen der Summe aus der Ist-Temperatur ($T_a$) der Batterie (40) und der prognostizierten Temperaturerhöhung ($T_{dc}$) der Batterie (40) angesichts der ersten, der zweiten und/oder der dritten Zieltemperatur ($T_{t1}$, $T_{t2}$, $T_{t3}$) umfasst.

**6.** Verfahren nach einem der vorstehenden Ansprüche, wobei das Wärmeverwaltungsgerät (1) mit einem Gaspedal (200) eines Fahrzeugs (2) verbunden ist und der Schritt des Erhaltens (S2) des Werts des Batteriestroms (I) der Batterie (40) das Erhalten (S21) einer Eingabe von dem Gaspedal (200) umfasst, die von einem Fahrer des Fahrzeugs (2) empfangen wurde.

**7.** Verfahren nach einem der vorstehenden Ansprüche, wobei der Schritt des Kühlens (S51) der Batterie (40) das Regulieren (S55) einer Kühleinheit (104) umfasst.

**8.** Verfahren nach einem der vorstehenden Ansprüche, wobei der Schritt des Erhitzens (S53) der Batterie (40) das Regulieren (S56) einer Heizeinheit (105) umfasst.

**9.** Verfahren nach einem der vorstehenden Ansprüche, wobei die Schritte S1-S5 kontinuierlich durchgeführt werden.

**10.** Wärmeverwaltungsgerät (1) zum proaktiven Verwalten einer Temperatur einer mit einem elektronischen Gerät (2) verbundenen Batterie (40), das so konfiguriert ist, dass es das Verfahren nach einem der Ansprüche 1 bis 9 durchführt.

**11.** Wärmeverwaltungsgerät (1) nach Anspruch 10, wobei das Wärmeverwaltungsgerät (1) mit der Batterie (40) und dem elektronischen Gerät (2) verbunden ist.

**12.** Wärmeverwaltungsgerät (1) nach Anspruch 10 oder 11, wobei das elektronische Gerät (2) ein elektrisches Fahrzeug, ein Smartphone, ein Tablet, ein tragbarer Computer oder ein elektrisches Fahrrad ist.

**Revendications**

**1.** Procédé exécuté dans un dispositif de gestion thermique (1) pour gérer pro-activement la température d'une batterie (40) connectée à un dispositif électronique (2), le procédé comprenant les étapes consistant à :

- obtenir (S1) une mesure de la température actuelle ($T_a$) de la batterie (40),
- obtenir (S2) une valeur d'un courant de batterie (I) de la batterie (40),
- déterminer (S3) une valeur de la résistance (R) de la batterie (40),
- déterminer (S4) une augmentation de température prédictive ($T_{dc}$) de la batterie (40) au moins sur la base de la valeur obtenue du courant de batterie (I) tiré de la batterie et de la valeur déterminée de la résistance (R), et
- gérer (S5) la température (T) de la batterie (40) au moins sur la base de la température actuelle ($T_a$) de la batterie et de l'augmentation de température prédictive ($T_{dc}$) de la batterie (40) en utilisant l'augmentation de température prédictive ($T_{dc}$) en tant que valeur de correction aval lors de la gestion de la température (T) de la batterie (40),

dans lequel l'étape de gestion (S5) de la température (T) de la batterie (40) comprend le refroidissement (S51) de la batterie (40) si la somme de la température actuelle de la batterie ($T_a$) et de l'augmentation de température prédictive ($T_{dc}$) est supérieure à une première température cible ($T_{t1}$), dans lequel l'étape de gestion (S5) de la température (T) de la batterie (40) comprend le refroidissement (S52) de la batterie (40) à une deuxième température cible ($T_{t2}$) si la somme de la température actuelle de batterie ($T_a$) et de l'augmentation de température prédictive ($T_{dc}$) est supérieure à la première température cible ($T_{t1}$), et dans lequel l'étape de gestion (S5) de la température (T) de la batterie (40) comprend le chauffage (S53) de la batterie (40), si la somme de la température actuelle de batterie ($T_a$) et de l'augmentation de température prédictive ($T_{dc}$) est inférieure à une troisième température cible ($T_{t3}$).

**2.** Procédé selon la revendication 1, dans lequel l'étape de détermination (S3) de la résistance (R) de la batterie (40) comprend l'étape d'obtention (S31) d'un ou de plusieurs de l'état de charge (SoC) de la batterie (40), de l'état de santé (SoH) de la batterie (40), de la température (T) de la batterie (40) et du courant (I) traversant la batterie (40).

**3.** Procédé selon l'une quelconque des revendications 1 ou 2, dans lequel la valeur déterminée (S3) de la résistance (R) de la batterie (40) est une valeur en temps réel de la résistance actuelle (R) de la batterie (40).

4. Procédé selon l'une quelconque des revendications précédentes, dans lequel l'augmentation de température prédictive ($T_{dc}$) est déterminée (S4) au moins sur la base de la fonction $T_{dc} \propto I^2{*}R$.

5. Procédé selon l'une quelconque des revendications précédentes, dans lequel l'étape de gestion (S5) de la température de la batterie (40) comprend la gestion (S54) du dispositif de gestion thermique (1) sur la base d'une différence de température ($\Delta T$) entre la somme de la température actuelle ($T_a$) de la batterie (40) et l'augmentation de température prédictive ($T_{dc}$) de la batterie (40) en vue d'au moins l'une de la première, de la deuxième et de la troisième température cible ($T_{t1}$, $T_{t2}$, $T_{t3}$).

6. Le procédé selon l'une quelconque des revendications précédentes, dans lequel le dispositif de gestion thermique (1) est connecté à un accélérateur (200) d'un véhicule (2) et l'étape d'obtention (S2) de la valeur du courant de batterie (I) de la batterie (40) comprend l'obtention (S21) d'une entrée provenant de l'accélérateur (200) et reçue d'un conducteur du véhicule (2).

7. Procédé selon l'une quelconque des revendications précédentes, dans lequel l'étape de refroidissement (S51) de la batterie (40) comprend la régulation (S55) d'une unité de refroidissement (104).

8. Procédé selon l'une quelconque des revendications précédentes, dans lequel l'étape de chauffage (S53) de la batterie (40) comprend la régulation (S56) d'une unité de chauffage (105).

9. Procédé selon l'une quelconque des revendications précédentes, dans lequel les étapes S1 à S5 sont exécutées en continu.

10. Dispositif de gestion thermique (1) pour gérer proactivement une température d'une batterie (40) connectée à un dispositif électronique (2), configuré pour exécuter le procédé selon l'une quelconque des revendications 1 à 9.

11. Dispositif de gestion thermique (1) selon la revendication 10, dans lequel le dispositif de gestion thermique (1) est connecté à la batterie (40) et au dispositif électronique (2).

12. Dispositif de gestion thermique (1) selon la revendication 10 ou 11, dans lequel le dispositif électronique (2) est l'un d'un véhicule électrique, d'un téléphone intelligent, d'une tablette, d'un ordinateur portable et d'un vélo électrique.

Fig. 1

Fig. 2

**S1**
Obtaining a measurement of the current temperature $T_a$ of the battery 40

**S2**
Obtaining a value of a battery current I of the battery 40

**S21**
Obtaining an input from the accelerator 200 received from a driver of the vehicle 2

**S3**
Determining a value of the resistance R of the battery 40

**S31**
Obtaining one or more of State of Charge SoC of the battery 40, State of Health SoH of the battery 40, the temperature T of the battery 40 and the current I flowing through the battery 40

**S4**
Determining a predictive temperature increase Tdc of the battery 40 at least based on the obtained value of the battery current I and the determined value of the resistance R

**S5**
Managing the temperature T of the battery 40 at least based on the current temperature Ta of the battery and the predictive temperature increase Tdc of the battery 40

**S51**
Cooling the battery 40 if the sum of the actual battery temperature $T_a$ and the predictive temperature increase $T_{dc}$ is higher than a first target temperature $T_{t1}$

**S52**
Cooling the battery 40 to a second target temperature $T_{t2}$ if the sum of the actual battery temperature $T_a$ and the predictive temperature increase $T_{dc}$ is higher than the first target temperature $T_{t1}$

**S53**
Heating the battery 40, if the sum of the actual battery temperature $T_a$ and the predictive temperature increase $T_{dc}$ is lower than a third target temperature $T_{t3}$

**S54**
Managing the thermal management device 1 based on a temperature difference $\Delta T$ between the sum of the current temperature $T_a$ of the battery 40 and the predictive temperature increase $T_{dc}$ of the battery 40 in view of at least one of the first, second and third target temperature $T_{t1}$, $T_{t2}$, $T_{t3}$

**S6**
Amplifying, in a proportional–integral–derivative (PID) controller, the temperature difference $\Delta T$

Fig. 3